# EUROPEAN PATENT SPECIFICATION

(11) **EP 2 858 478 B1**
(45) Date of publication and mention of the grant of the patent: **07.12.2016**
(21) Application number: 13739798.0
(22) Date of filing: 04.06.2013
(51) Int. Cl.: A01G 17/14, A01G 17/00

(54) **AGRICULTURAL SHAPED POLE HAVING SUPPORTING THREADS FOR PLANTS AND RELATED ASSEMBLY**
LANDWIRTSCHAFTLICHE, GEFORMTEN PFOSTEN MIT STÜTZSTRÄNGEN FÜR PFLANZEN UND ZUGEHÖRIGE ANORDNUNG
TUTEUR AGRICOLE PROFILÉ PRÉSENTANT DES FILS DE SUPPORT POUR LES PLANTES ET ENSEMBLE ASSOCIÉ

(30) Priority: 07.06.2012 IT PN20120030
(43) Date of publication of application: 15.04.2015
(73) Proprietor: Bortolussi, Claudio, 33080 Fiume Veneto (PN) (IT); Bortolussi, Franco, 33080 Fiume Veneto (PN) (IT)
(72) Inventor: BORTOLUSSI, Claudio, 33080 Fiume Veneto (PN) (IT); BORTOLUSSI, Franco, 33080 Fiume Veneto (PN) (IT); TRIACCA, Domenico, 33080 Fiume Veneto (PN) (IT)
(74) Representative: Giugni, Diego
(86) International application number: PCT/IB2013/054578
(87) International publication number: WO 2013/182975

(56) References cited:
- DE-C- 825 323
- FR-A1- 2 768 019
- US-B1- 6 454 244

## Description

### TECHNICAL FIELD OF THE INVENTION

The present invention is related to an agricultural shaped pole whereto supporting threads for plants or parts of fruit-bearing plants are fixed. In particular, the invention is related to an assembly for vine breeding comprising a plurality of shaped poles whereto supporting wires of vine parts are fixed. The form or the shape of the pole makes it possible to arrange the threads so as to ensure the best air and sun exposure to the vegetative part and to fruits.

### PRIOR ART TECHNIQUE

It is widely known in the agricultural field, and especially in that of vine breeding, that there are various ways for plant breeding. Such ways have been developed in order to optimize some of the fundamental characteristics necessary for a good quality and productivity of plants, for example, in order to obtain a high exposed foliage surface, a high canopy density, a balanced growth of shoots, a good exposure of the grape clusters and a vegetal-productive equilibrium (correct relationship between shoots and grape clusters).

For this purpose, the choice of the most suitable way depends on factors such as the environmental conditions (geography and structure of the land, climate), the vine variety and the desired level of mechanization.

Today, mainly for the vine growers who work in high-sloped areas, there are serious problems in managing a vineyard because of working difficulties and high management costs.

In fact, the arrangement of plants according to the "rittochino" layout, the most used in hilly areas, consists in arranging the rows parallel between each other along the line of maximum slope, with drainage furrows (sluiceways) for the excessive rainwater; they, too, arranged along said line. The main disadvantage of this arrangement is the topsoil erosion as the waters following the slope carry downstream large amounts of soil. As a consequence, expensive maintenance operations are necessary in order to contain such phenomenon. Moreover, whenever there are high slopes, the use of agricultural machines is impossible or dangerous because of easy capsizing. Alternatively, it is necessary to use telpherage systems, which, however, are very expensive.

The contour plowing arrangement has been introduced in order to overcome the above-described disadvantage and it consists in arranging the rows parallel between each other and perpendicular to the line of maximum slope. The sluiceways delimit the rows upstream and have a slight slope with respect to the contour line of the ground that is in cartography the curves which join points of equal elevation or, in other words equidistant vertical points with reference to the mean sea level. Thus, the sluiceways make water flow into an open ditch placed along a maximum slope line. This arrangement can also be applied in the presence of steep slopes, but the slopes must have a regular profile otherwise in the presence of unevenness the typical mechanical operations of intensive agriculture will result difficult. Moreover the machines risk capsizing when the slopes are higher than 20%.

In the presence of steep slopes, in order to overcome the inconvenience of the risk of capsizing, it is carried out according to the "ciglionamento" layout that is terracing which requires building walls or reinforcing benches spaced out by level plains where the rows are arranged. The walls or benches can basically be vertical or inclined. If vertical, they are preferably made of dry stone walls or nets to support and ensure the soil stability. Conversely, both the walls and the benches can be grassed over so as to ensure a certain stability as well. Such arrangement advantageously enables the transit of agricultural machines in order to facilitate work and, therefore, to reduce costs. On the other hand, this system is very expensive to set up and to manage.

An agricultural pole of the prior art is disclosed in e.g. US 6 454 244 B1.

### SUMMARY OF THE INVENTION

The technical problem at the basis of the present invention is therefore that of devising an agricultural assembly for breeding fruit-bearing plants which will enable to use the best arrangement and the best form of breeding so as to ensure high qualitative and quantitative production of the orchard in order to compensate for the setting up and management of intensive breeding, such as those developed through contour plowing on a terraced land.

This problem is solved by a particular making of the agricultural assemblies capable of ensuring the increase of the quantity and quality of the crop.

A first object of the invention is, therefore, an agricultural shaped pole for supporting wires which in turn support plants of parts of plants and makes it possible a uniform distribution of the vegetative mass of the plant.

A second object of the invention is an agricultural assembly for supporting parts of fruit-bearing plants comprising said shaped pole.

A third object is the use of an agricultural pole for supporting parts of fruit-bearing plants.

A further object of the invention is a method of breeding fruit-bearing plants comprising a step of providing said shaped pole.

### BRIEF DESCRIPTION OF THE DRAWINGS

Further characteristics and advantages of the shaped pole of the invention will become more apparent from the following description of a form of embodiment for exemplification only but not limited to with reference to the following figures wherein:
- Figure 1 shows an axonometric view of an agricultural shaped pole according to the invention;
- Figure 2 is a side view of the pole in figure 1;
- Figure 3 is an axonometric view of an end portion of an agricultural assembly for supporting fruit-bearing plants according to the invention, in a first operating condition;
- Figure 4 shows an axonometric view of an end portion of an agricultural assembly for supporting fruit-bearing plants according to the invention, in a second operating condition;
- Figure 5 shows an axonometric view of an end portion of a form of breeding fruit-bearing plants comprising the assembly in figure 3, in a first vegetative condition;
- Figure 6 shows an axonometric view of the end portion of a form of breeding fruit-bearing plants comprising the assembly in figure 3, in a second vegetative condition;
- Figure 7 shows an axonometric view of the end portion of a form of breeding fruit bearing plants comprising the assembly in figure 3, in a third vegetative condition;
- Figure 8 shows an axonometric view of the end portion of a form of breeding fruit-bearing plants comprising the assembly in figure 4, in a fourth vegetative condition;
- Figure 9 shows a side view of an end portion of a row with fruits, in accordance with the invention;
- Figure 10 shows an axonometric view of a particular of the assembly in figure 4.

### DETAILED DESCRIPTION OF THE INVENTION

For a better understanding of the objects of the present invention, herewith will be given some brief, basic, simple definitions related to grapevine and its supporting structure, for example according to what written in the volume: "Viticultura di Qualita" (Quality Viticulture) by Mario Fregoni, second edition 2005, published by Phytoline S.r.l..

The vine plant is composed of a hypogeal root stock and of a trunk which is the epigeal organ. The trunk carries the branches, fruit-bearing branches and the shoots which in turn carry leaves and grape clusters. The trunk has a basal portion called base from where the trunk rises whereon the branches develop: trunk and branches are the old wooden parts. The branches are the older branches from which the one-year-old fruit-bearing branches develop. From the fruit-bearing branches grow the shoots, that is, the vegetative/herbaceous part of the plant, whereon the leaves develop and, in the opposite position, the grape clusters or tendrils (cirruses). The branches are composed of elongated portions (internodes) distanced by widened portions (nodes). In correspondence with the nodes buds form which, in turn, can give origin to various elements among which the grape clusters.

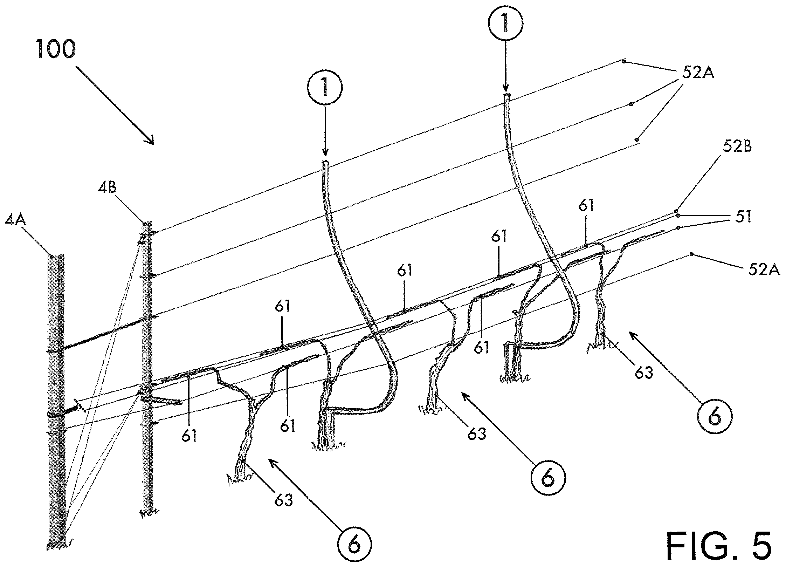

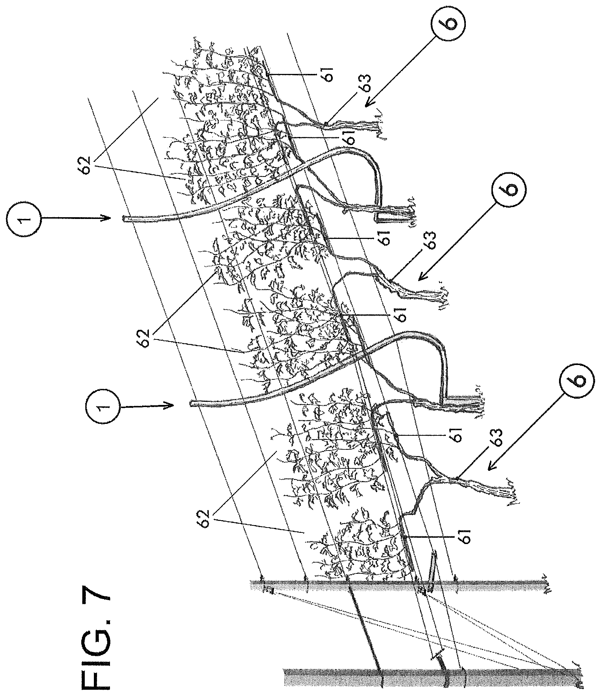

In viticulture there are various systems of breeding among which the Guyot system (figures 5-8), together with all its variations, is the one mainly used in hilly areas. This breeding system consists in making a plant grow and then in pruning it so as to obtain a trunk which is generally 30-100 cm high. The trunk carries a cane or fruiting cane with 6-10 buds which is horizontally tied down in the row direction, and a spur with 1-2 buds which is for giving origin to the new branches the following year. The plants trained as such can be arranged binate beside each support pole with the respective canes opposed along the row or at about 90 cm one from the other with two opposed canes along the row (figure 5).

Moreover, the distance between parallel rows is conditioned by the land slope and can vary from 1.8 to 2.8 m.

In order to achieve the best conditions for the development of the plant, it is used an assembly or a structure or a support scaffolding comprising a plurality of rectilinear poles vertically fixed into the ground so as to have an above soil height generally higher than 1.8 m and 3-6 m spaced one far from the other along the row. The poles are connected between them by support threads positioned horizontally and parallel between each other at various heights so as to form an assembly called "espalier". The threads are stretched between said poles by means of end poles, positioned at the end of the rows, and suitable accessories. Traditionally, the support threads are wires and they are divided into supporting wires having a diameter of 1.8 mm and positioned between 0.6 and 0.8 m above the soil and bearing wires having a diameter of 1.6 mm and positioned at different level above or below the supporting wires at a distance between 0.4 and 0.5 m in relation with the supporting wires and between each other. In particular the supporting wires have the function of directly supporting the branch or the fruit branch and indirectly also the trunk, while the bearing wires have the function of supporting the yearly green part that is the vegetative part or the fruit-bearing shoots.

The just outlined assembly has the function of distributing the vegetative part of the plant so as to obtain the best extension and uniformity possible. In fact, all the branches or shoots which make up the breeding vegetative part and which depart from the fruit-bearing branch are subdivided into ascending sap branches and descending sap branches. This subdivision is achieved allowing the growth of some branches upward laying them on the bearing wires positioned above the wire supporting the fruit-bearing branches, and the growth of some branched downward laying them on the bearing wires positioned below the said wire supporting said fruit-bearing branches.

It has been observed that the above said distribution really makes it possible an increase in the production but it has the inconvenience of not ensuring a uniform distribution, ripening and integrity of fruits. In fact, the espalier-shaped assembly supports fruits vertically in contact with leaves, vegetative branches, branches and wires. Consequently, their air and sun exposure is not uniform. Moreover, the fruits, at the ripening stage, are subject to skin breaking and therefore to an inferior quality.

The idea at the basis of the invention is therefore that of enabling the development and ripening of fruits as freely as possible, that is without being into contact either with the vegetative part of the plant, or with the espalier-shaped assembly.

Following a number of attempt at modifying the elements of the assembly, it has been observed that if the shape of the supporting poles whereon the plant lays is shaped so as to form different vertical planes for the vegetative growth, then it will be possible to achieve a separate fruit growth with respect to both the plant and the support structure of the assembly.

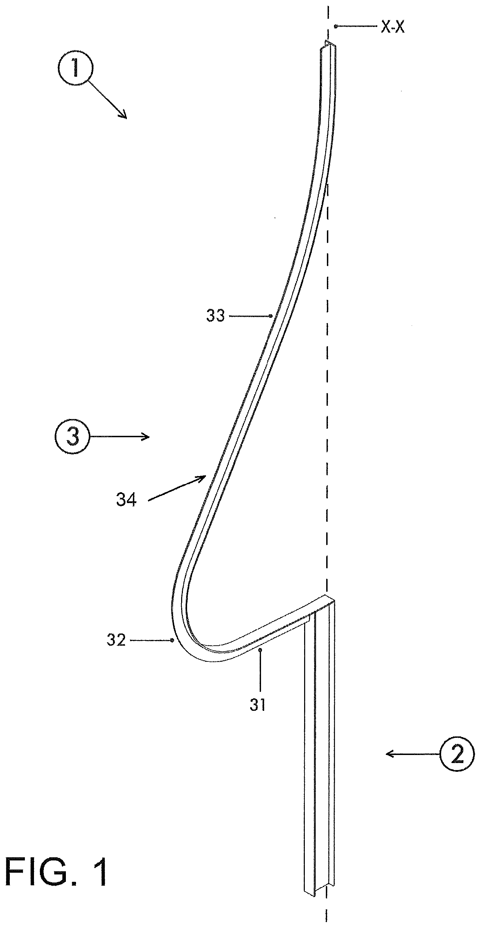

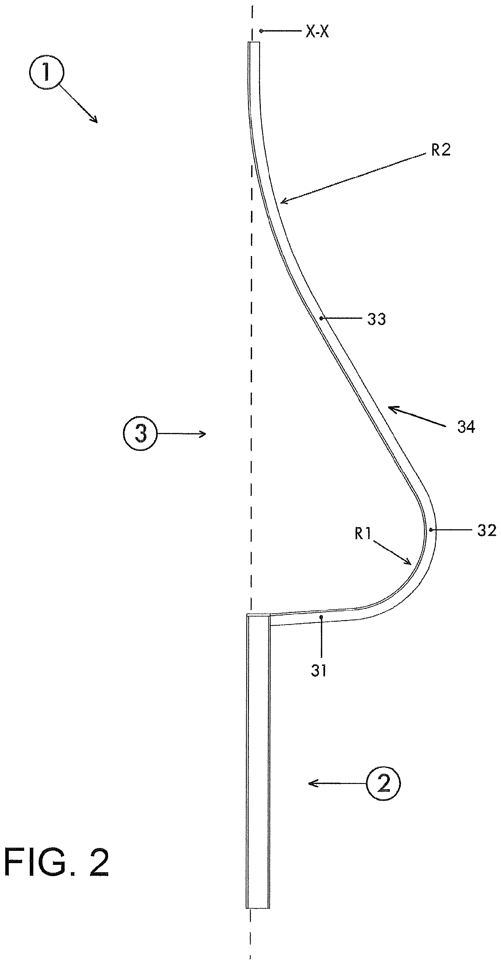

With reference to figures 1 and 2, number 1 is referred to a shaped agricultural pole having a longitudinal axis X-X. Pole 1 comprises a base 2 for fixing into the ground formed of a part with a body 3 whereon, in a removable or non-removable manner, a plurality of wires supporting the fruit-bearing plant will be fixed.

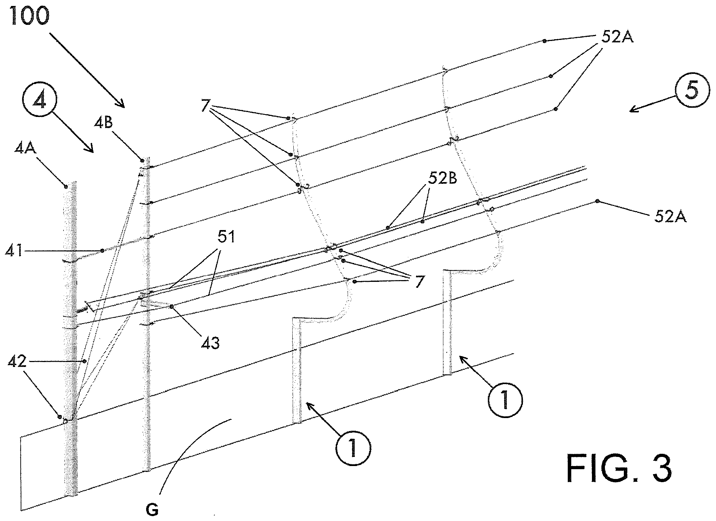

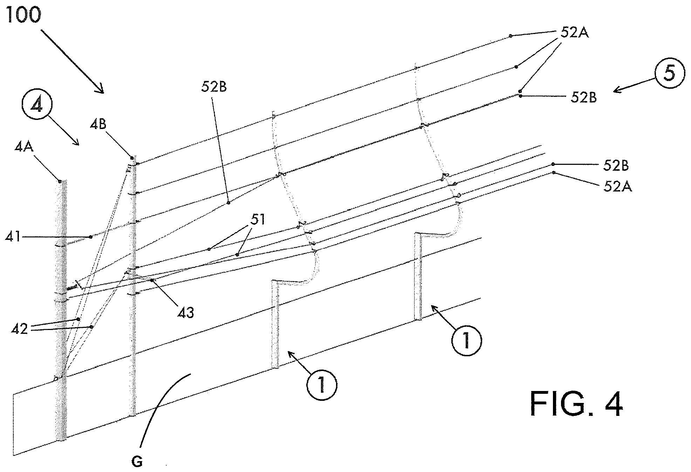

In particular, the base 2 is a straight segment positioned along said longitudinal axis X-X and is fixed into the ground G preferably at a depth which can vary from 50 to 70 cm, while pole 1 extends from the ground for a length which can preferably vary from 220 to 250 cm, as better shown in figures 3 and 4. The base 2, preferably has a double T (or H) shaped cross section.

The body 3 has a shaped form so as to project with respect to the axis X-X, as better shown in figure 2. In other words, the body 3 comprises at least a first portion 34 oblique with respect to axis X-X moving away towards the base 2 and a second portion 31 connecting said first portion 34 and said base 2. Practically, the first portion 34, when the pole is being used, is inclined with the respect to the pole axis itself so as to have one side upward, that is towards the sun rays exposure. On the other hand, the opposite side is freely accessible or without any obstruction. Such shaped form of the body 3 of pole 1 outlines a triangle without one of its sides.

In accordance with a preferred form of embodiment, the body 3 has generally a curved form with a first portion 34 comprising a first arc segment 32 concave respect to said axis X-X and a second arc segment 33 being opposite to said first arc segment and that is convex respect to said axis X-X, and a second straight and horizontal or basically horizontal portion 31 connecting the base 2. In other words, the pole has an accentuated bulging body close to the base. Preferably it has a simple T cross section with the T stem being opposite to said axis X-X.

The second straight portion 31 extends from the end base 2 which is out of the ground, basically orthogonal with respect to the base 2 extent. Moreover, its length varies from 30 cm to 40 cm.

The first segment 32 of the first portion 34 has a radius R1 preferably comprised between 25 cm and 35 cm and the second segment 33 has a radius R2 preferably comprised between 155 cm and 165 cm (figure 2).

The total axial length of the body 3 of the pole 1 preferably varies from 240 cm to 260 cm.

The agricultural shaped pole has the function, as already said, of supporting a plurality of threads supporting the plant. These threads are hooked in a removable or non-removable manner on the pole usually by means of traditional hooks. Alternatively or in combination, the pole itself can be provided with notches and/or circumscribed through holes adapted for housing the threads. Both the hooks and the notches are spaced along the body 3 of the pole in order to enable the positioning of the threads in a variable way according to the requirements called for by the length of the branches and of the vegetative part of the plant. The notches and the holes can also be used as hooking seat for the hooks themselves.

The pole 1 can preferably be made of metal materials such as iron, galvanized iron, steel, stainless steel, COR-TEN steel (also called brushed steel, is a low carbon steel added with copper, chromium and phosphor) or galvanized steel, o particularly resistant plastic materials such as plastics reinforced with carbon fibers, pre-peg (pre-impregnated thermosetting polymers, in case reinforced with glass or carbon fiber), PVC, fiberglass reinforced polyester.

With reference to figures 3 and 4, and in accordance with a second object of the invention, the number 100 is referred, on the whole, to an end portion of an espalier-shaped agricultural assembly for supporting fruit-bearing plants (not shown) comprising a plurality of agricultural shaped poles 1, such as those previously described, and end poles 4 for tying and stretching a plurality of supporting threads 5.

The end poles 4 are positioned at the two ends of each row and can be rather robust single poles and of various materials or coupled poles, such as those shown in figures 3 and 4. The single poles can be anchored athwart to the ground with the slope opposite to the row development and/or provided with anchoring ropes to the ground. In the case of coupled poles, a first pole whereon the threads are fixed is vertical while the second pole is fixed to the first one so as to prop it up against the tensile stress exercised by the stretching of the threads. The most used materials are concrete especially pre-stressed concrete reinforced with iron rods and wood. Alternatively, as shown in figures 3 and 4, a first pole 4A is fixed to the ground in the end position and is followed by a second pole 4B, both being aligned along the row. Preferably they are connected by a crossbar 41 that acts as a strut and the second pole 4B, is anchored to the ground at the level of the base of the first pole 4A by means of tension rods 42. Moreover, in the form of embodiment shown, the second pole 4B is provided with an arm 43 projecting so as to be perpendicular respect to the vertical development of the pole itself. Such arm has the function of bearing the lower supporting thread 51 from the end pole 4A to the first shaped pole 1.

The support threads 5 are plastic threads or wires (for example of galvanized, zinc-aluminate steel or stainless steel) and comprise at least a supporting thread 51 for the fruit bearing branch and a plurality of bearing threads 52 for the shoots of the plant. In the case shown in figures from 3 to 8, the supporting threads 51 are two as the breeding system is the "Guyot" double branch type, while the bearing threads 52 are six subdivided into fixed bearing threads 52A and movable ones 52B. The movable threads 52B can be moved vertically in order to follow, and therefore to support better, the growing vegetation. In fact, these are fixed, in a removable manner, to the body 3 of the shaped pole 1 by means of hooks 7 or notches and can be unhooked from the initial position, which can be in the proximity of the higher supporting wire 51, as shown, and placed higher or lower. When there are not any movable threads left 52B (two in the case shown in figures 3-8), these are positioned near the higher supporting thread 51 and unhooked in order to place them lower towards the lower bearing thread 52A and higher than the first bearing thread 52A positioned above the higher supporting thread 51. Said changes can be carried out by simply unhooking the threads from the initial hooking means, which, as previously explained, can be hooks applied to the pole or open notches made on the pole itself, and hooking them anew in various similar hooking means present in different positions along the shaped pole 1 (figure 4). It is to note that, however, also the supporting threads 51 and the fixed bearing threads 52A can be fastened to the pole by means of the above said hooks 7. In this case it is used either clamping hooks on the pole, that is hooks which firmly fix the thread to the pole, or open hooks which enable an easy removal of the support on the pole but which really are not removed except when they have to be replaced.

A third object of the invention consists in the use of a shaped agricultural polel for the construction of an assembly for breeding fruit-bearing plants.

In fact, the just described agricultural shaped pole has proved itself advantageously useful in order to solve the above said problems connected to the exposure of the vegetative part of the plant and, in particular, of the fruits.

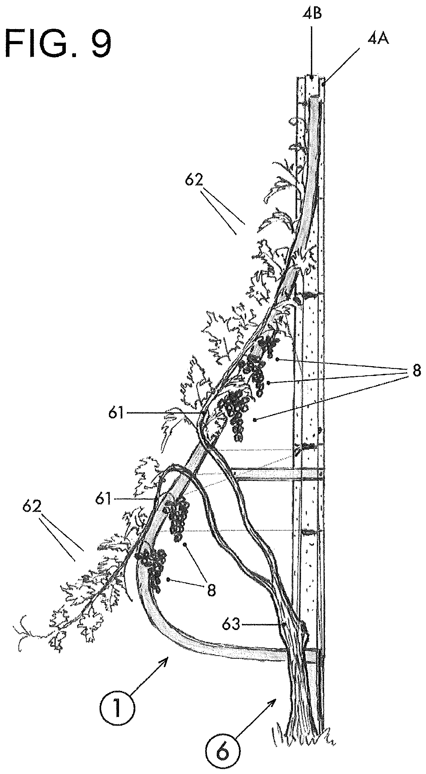

As shown in figure 9, it is possible to observe that the fruits, that is the grape clusters, can grow completely free, without obstructions. In particular, the grape clusters are hung to the respective shoots but basically they are not into contact either between each other or with the vegetative parts of the plant such as branches and leaves, or any other element of the agricultural assembly. This arrangement is obtained just thanks to the curved shaping of the agricultural shaped pole 1 of the present invention. The curvature of the pole, in fact, makes it possible to form a number of spaced vertical planes along which the fruits can grow freely.

In this way it is ensured the maximum air and sun exposure both of the vegetative parts and of the fruits. It is important that the plant has the possibility to expand itself with the maximum vegetative surface in order to increase the number of grape clusters per production unit, that is of the plant, of the whole assembly.

As outlined in the introduction of the present description, it is fundamental to balance the high management costs of a Guyot breeding on an espalier in steep sloped hilly areas with a high production. In other words, it is necessary to increase the density of the grape clusters per constant surface.

All this has been obtained thanks to the use of the shaped pole and of the just described related assembly, as well as of the breeding method as hereafter described.

In accordance with a further object of the present invention, in fact, it is described a "Guyot" agricultural method for fruit-bearing plants on an espalier structure (figure 5-8) comprising a first step of:
a) Providing a plurality of agricultural shaped poles 1 as in the foregoing;
b) Fixing into the ground said plurality of agricultural shaped poles 1, in the presence or not of fruit-bearing plants 6, at a preset distance between each pole;
c) Fixing to said poles a plurality of plastic threads or wires 5 horizontally and parallel between each other to support plants 6 comprising at least a supporting thread 51 and at least a bearing thread 52A, 52B;
d) Letting the fruit-bearing plants 6 grow;
e) Tying the fruit branch 61 of the plant 6 up to at least a supporting thread;
f) Letting the shoots 62 of the plant 6 grow;
g) Laying or tying the shoots 62 to bearing threads 52A in order to obtain parts of the plant with ascending sap and parts of the plant with descending sap uniformly distributed along said plurality of threads 5 and so that fruits 8 grow without substantial contact between each other, with parts of the plant or with supporting elements of the same plants.

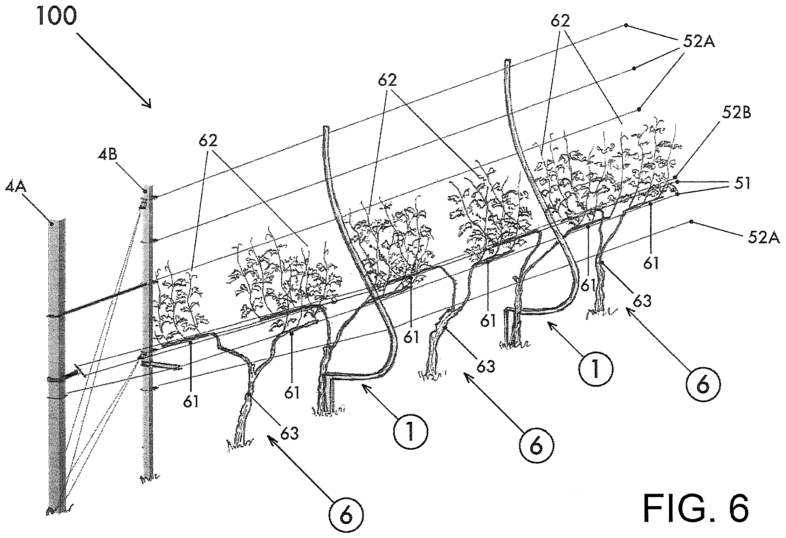

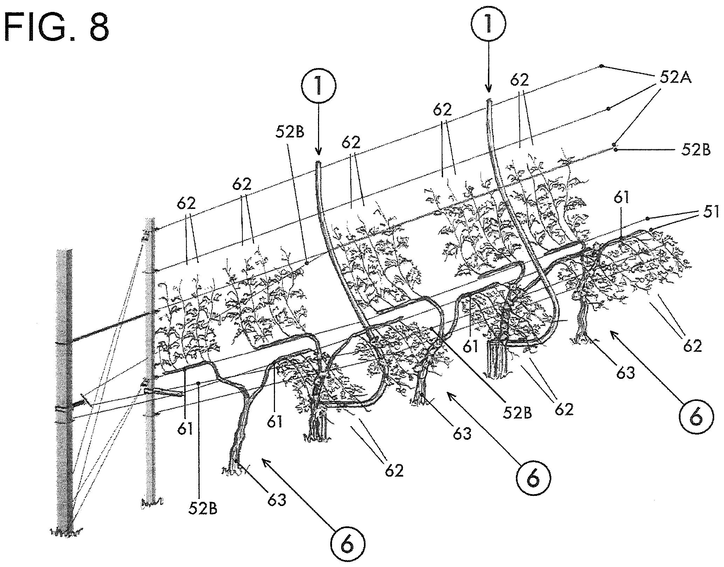

With particular reference to figure 5, step a) consists in providing a number of agricultural shaped poles 1 previously described so as to form an espalier assembly 100, preferably with all the above said characteristics.
Step b) is carried out fixing the poles 1 into the ground at, for example, a depth of 50-70 cm, spaced between each other from 3 m to 6 m along the rows arranged according to contour plowing. Moreover, the bulging form is downstream or south oriented. The number of poles per row is set according to the land geography and to the number of plants 6 based on the distance which has to be respected between each other. These characteristics will also depend on grapevine varieties and will be defined in accordance with the common knowledge of the skilled in the field.
Step c) comprises fixing two fixed supporting threads 51 whereon the fruit-bearing branches of the plants are then tied down, at least two fixed bearing threads 52A, preferably four, for the shoots 62 (figure 6) and two movable bearing threads 52B in order to adjust said shoots to growth (figures 5 and 6). In particular, the fixing of the supporting threads 51 and of the bearing threads 52A and 52B occurs as previously described with reference to the use of notches or holes directly provided on the body 3 of pole 1 or by means of traditional hooks (not shown), as specified above.
Step d) allows the growth of the trunk 63 of the plant 6 up to a height between 50 cm and 100 cm, and with at least a fruit-bearing branch of a length from 70 cm to 100 cm from the trunk, depending on the type of vine variety, preferably branches 61 are two according to double "Guyot" breeding.
Step e) comprises tying two fruit branches 61 of each plant to a different supporting thread 51 facing opposite directions (figure 5).
Step f) consists in letting the fruit branches give origin to the vegetative part of the plant and that is to the shoots 62 (figures 5-8).
Step g) is carried out laying or tying the shoots 62 of each fruit-bearing branch 61 of a plant alternatively upward or downward on the respective bearing threads 52 (figure 8).

The method can further comprise the step of moving one or both movable bearing threads 52B upward and downward (figure 8) so as to accompany and support the growth of the shoots 62 in the best possible way. In fact, when growing, the shoots become considerably longer, they are fragile and have to be supported in different points in order not to risk their breaking and thus hinder the development of the grape clusters.

In figure 9, it is shown a side view of an end portion of a row in the fructification stage. It can be clearly noticed how, thanks to the curved shape of the pole 1 and of the assembly of the invention, the grape clusters 8 are hung basically free, that is without substantial contacts either between each other or with other parts of the plant 6, or with any part of the same assembly. Moreover, it is to notice that the exposure surface is inclined with respect to the perpendicular to the ground. In this way, all the shoots of the plant are exposed to the sun in an optimal way. In other words the assembly acts as a sort of solar panel oriented so as to take advantage of the sunlight as much as possible.

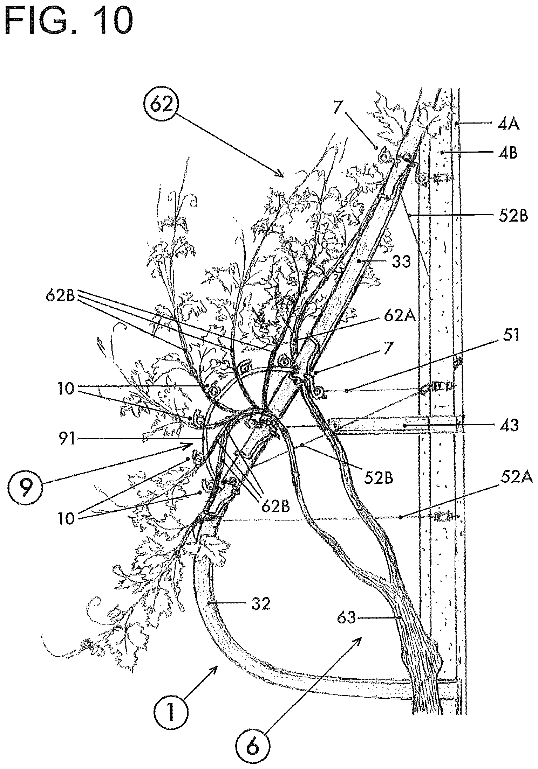

In accordance with a particular form of the present invention, the assembly 100, as shown in figure 10, can advantageously comprise a device 9 for adjusting the position of the lower movable bearing thread 52B. In particular, the device 9 has the function of making it possible to decide the position of the movable thread with respect to the initial position where it is located. Practically, if the initial position is a resting position in the proximity of the higher supporting thread 51, as shown in figure 3, by means of such device it is possible to gradually modify the position downward. This function has the purpose of gradually accompanying the shoots 62 facing downward without running the risk of causing their breaking with too ample movements, due to the above said fragility of the shoots themselves.

The device 9 comprises an arc guide 91 mounted onto the body 3 of the pole 1, preferably in correspondence of the second segment 33 of the first portion 34 in proximity of the segment 32. Moreover, the guide 9 projects with respect to the plane outlined by the bulging form of the body 3 of the pole 1. It is also provided with open notches or, as shown in figure 10, with hooks 10 applied at preset distances and changeable along the perimeter of the arc guide in order to allow the repeated hooking and unhooking of a bearing thread 52B so as to position it at discrete distances, gradually farther moving away downward with respect to the supporting thread 51 so that in the end the shoots will lay on the lower bearing thread 52A.

In particular, in figure 10 the ascending sap vegetative part 62A is bent upward, while the descending sap vegetative part 62B is bent downward and it is here shown in six different positions. In fact, the ascending part 62A grows naturally upward and, only when it reaches a certain length, it tends to bend downward because of its weight. At this stage, a movable bearing thread 52B is put at the same level as that of the fixed bearing thread 52A nearer to the higher supporting thread so as to keep the ascending part 62A laying on said fixed bearing thread 52A. In other words, the ascending shoots 62A are tied between a fixed bearing thread 52A and a movable bearing thread 52B. Conversely, the descending sap part 62B is carefully accompanied by a second movable bearing thread 52B downward in six different positions. Obviously, such positions can vary in their number according to the judgment of the person skilled in the field and of the vine variety.

From what described so far it is clear that the problems highlighted in the introduction of the present invention have been overcome. In fact, thanks to the arched shape of the agricultural shaped pole 1 it is possible to arrange the supporting threads stretched on an espalier assembly, and the shoots of the plant, bred through the "Guyot" system, on different vertical planes. This allows the shoots to grow on different vertical planes so that from these can develop grape clusters hanging freely or, in other words, not into contact between each other and neither with vegetative parts of the plant or with parts of the same agricultural assembly structure. Further, all the parts of the plant can thus be reached by the chemical products which are distributed in the most homogeneous possible way, above all for the integrity of the whole grape cluster.

Moreover, the use of such pole enable to build an espalier supporting assembly with the contour plowing arrangement of the plants on hilly lands also with high slope so that the maintenance operations of the assembly itself and of the land as well as of the care of the plants can be facilitated. In particular, it is possible to mechanize all the typical operations of a vineyard in the best possible way. It results that the relative costs are lowered effectively and at the same time, the vineyard is capable of increasing its productivity and its quality.

A lot of modifications to the pole, assembly and method for breeding grapevines objects of the present invention can be carried out by the skilled in the art, however without exiting the protection field as defined by the following claims.

For example, the agricultural shaped pole 1, the assembly 100 and the method in accordance with the invention can be carried out also on flat lands.

The section of both the base and of the body of the pole can have forms different from those specified, such as close or open section of the geometric type for example curvilinear or polygonal, and different between the base and the body in order to meet specific requirements or preferences.

## Claims

1. Agricultural shaped pole (1) having a longitudinal axis (X-X) and comprising a base (2) for fixing into the ground, substantially straight and along said axis (X-X), and a body (3) supporting in a removable or non-removable manner a plurality of plastic threads or wires (5) which in turn support fruit-bearing plants, **characterized in that** the body (3) is a single piece with the base (2) and is shaped so as to have a first portion (34) oblique with respect to and moving away from said axis (X-X) towards the base (2) and a second portion (31) connecting said first portion (34) to the base (2).

2. Agricultural shaped pole (1) according to claim 1, wherein said second portion (31) is straight and substantially horizontal, and said first portion (34) comprises a first arc segment (32) being concave with respect to said axis (X-X) and starting from said first portion (31), and a second arc segment (33) being opposite to said first segment, i.e. convex with respect to sais axis (X-X).

3. Agricultural shaped pole (1) according to claim 2, wherein said first arc segment (32) of the body (3) has a radius comprised between 25 and 35 cm and said second arc segment (33) has a radius comprised between 155 and 165 cm.

4. Agricultural shaped pole (1) according to claim 2 or 3, wherein said base (2) has a cross section forming a H and the body (3) has a cross section forming a T with the T stem being opposite to said axis (X-X).

5. Agricultural shaped pole (1) according to any one of claims 1 to 4, wherein said pole is made of a material selected from metal materials as iron, galvanized iron, steel, stainless steel, COR-TEN steel or galvanized steel, or from plastic materials particularly resistant as plastics reinforced with carbon fibers, PVC, polyester reinforced with glass fibers.

6. Agricultural assembly (100) for supporting fruit-bearing plants, comprising the agricultural shaped pole (1) according any one of claims 1 to 5.

7. Agricultural assembly (100) according to claim 6, further comprising end poles (4) for attaching and stretching a plurality (5) of plastic threads or wires supporting fruit-bearing plants (6), plastic threads or wires which extend among a plurality of agricultural shaped poles (1) substantially horizontally and parallel between each other.

8. Agricultural assembly (100) according to claim 7, wherein said plurality (5) of supporting plastic threads or wires comprises at least one plastic thread or wire (51) supporting branches (61) and a plurality (52) of plastic threads or wires bearing shoots (62) of the plant (6).

9. Agricultural assembly (100) according to claim 8, wherein said plurality (5) of supporting plastic threads or wires comprises two supporting threads or wires (51) preferably positioned between the first arc segment (32) and the second arc segment (33) of the body (3) of the pole (1), and a plurality of bearing plastic threads or wires (52) divided in fixed bearing plastic threads or wires (52A) and movable bearing plastic threads or wires (52B).

10. Agricultural assembly (100) according to any one of claims 6 to 9, further comprising two end poles (4A, 4B), positioned at the opposing ends of each row, said plurality (5) of supporting plastic threads or wires extending form said end poles.

11. Agricultural assembly (100) according to any one of claims 6 to 10, further comprising a device (9) for adjusting the position of the movable bearing plastic threads or wires (58B), preferably comprising an arc guide (91) mounted onto the body (3) of the pole (1) in correspondence with the second arc segment (33)
and in proximity of the first arc segment (32), and comprising hooks (10) for allowing repeatedly the hooking and unhooking of a movable bearing plastic thread or wire (52B).

12. Use of an agricultural shaped pole (1) according to any one of claims 1 to 5 for assembling an agricultural assembly (100) of breeding fruit-bearing plants (6).

13. Method of breeding fruit-bearing plants (6) comprising the following steps:
a) providing a plurality of agricultural shaped poles (1) according to any one of claims 1 to 5;
b) fixing into the ground said plurality of agricultural shaped poles (1), while fruit-bearing plants are present or not (6), at a preset distance between each other;
c) fixing to said poles in a removable or non-removable manner a plurality (5) of plastic threads or wires, horizontally and parallel to each other, to support plants (6), said plastic threads or wires comprising at least one supporting thread or wire (51) and at least one bearing plastic thread or wire (52A, 52B);
d) letting the fruit-bearing plants (6) grow;
e) tying the fruit branches (61) of the plant (6) up to said at least a supporting plastic thread or wire (51);
f) letting the shoots (62) of the plants (6) grow;
g) laying or tying the shoots (62) to bearing plastic threads or wires (52A) in order to obtain parts of the plant with ascending sap and parts of the plant with descending sap, all parts being uniformly distributed along said plurality (5) of plastic threads or wires and so that fruits (8) grow without substantial contact with each other or with parts of the plants or with supporting elements of the same plants.

## Patentansprüche

1. Geformte Stange (1) für landwirtschaftliche Zwecke, die eine Längsachse (X-X) hat und ein Unterteil (2) zum Befestigen im Boden, das im Wesentlichen gerade ist und sich entlang der Achse (X-X) erstreckt, sowie einen Körper (3) umfasst, der abnehmbar oder nicht abnehmbar eine Vielzahl von Kunststofffäden oder -drähten (5) trägt, die ihrerseits fruchttragende Pflanzen stützen, **dadurch gekennzeichnet, dass** der Körper (3) aus einem Stück mit dem Unterteil (2) besteht und so geformt ist, dass er einen ersten Abschnitt (34), der in Bezug auf die Achse (X-X) schräg ist und sich auf das Unterteil (2) zu von ihr weg bewegt, sowie einen zweiten Abschnitt (31) hat, der den ersten Abschnitt (34) mit dem Unterteil (2) verbindet.

2. Geformte Stange (1) für landwirtschaftliche Zwecke nach Anspruch 1, wobei der zweite Abschnitt (31) gerade und im Wesentlichen horizontal ist und der erste Abschnitt (34) ein erstes Bogen-Segment (32), das in Bezug auf die Achse (X-X) konkav ist und von dem ersten Abschnitt (31) ausgeht, sowie ein zweites Bogen-Segment (33) umfasst, dass entgegengesetzt zu dem ersten Segment, d. h., konvex in Bezug auf die Achse (X-X) ist.

3. Geformte Stange (1) für landwirtschaftliche Zwecke nach Anspruch 2, wobei das erste Bogen-Segment (32) des Körpers (3) einen Radius hat, der zwischen 25 und 35 cm liegt, und das zweite Bogen-Segment (33) einen Radius hat, der zwischen 155 und 165 cm liegt.

4. Geformte Stange (1) für landwirtschaftliche Zwecke nach Anspruch 2 oder 3, wobei das Unterteil (2) einen Querschnitt hat, der ein "H" bildet, und der Körper (3) einen Querschnitt hat, der ein "T" bildet, wobei der Stamm des "T" der Achse (X-X) gegenüberliegt.

5. Geformte Stange (1) für landwirtschaftliche Zwecke nach einem der Ansprüche 1 bis 4, wobei die Stange aus einem Material besteht, das aus Metallmaterialien, wie Eisen, verzinktem Eisen, Stahl, rostfreiem Stahl, COR-TEN-Stahl oder verzinktem Stahl oder aus Kunststoffmaterialien, die besonders widerstandsfähig sind, wie beispielsweise mit Kohlefasern verstärktem Kunststoff, PVC, mit Glasfasern verstärktem Polyester, besteht.

6. Anordnung (100) für landwirtschaftliche Zwecke zum Stützen fruchttragender Pflanzen, die die geformte Stange (1) für landwirtschaftliche Zwecke nach einem der Ansprüche 1 bis 5 umfasst.

7. Anordnung (100) für landwirtschaftliche Zwecke nach Anspruch 6, die des Weiteren Endstützen (4) zum Anbringen und Spannen einer Vielzahl von Kunststofffäden oder -drähten, die fruchttragende Pflanzen (6) stützen, und Kunststofffäden oder -drähte umfasst, die sich im Wesentlichen horizontal und parallel zueinander zwischen einer Vielzahl geformter Stangen (1) für landwirtschaftliche Zwecke erstrecken.

8. Anordnung (100) für landwirtschaftliche Zwecke nach Anspruch 1, wobei die Vielzahl (5) stützender Kunststofffäden oder -drähte wenigstens einen Kunststofffaden oder -draht (51), der Zweige (61) stützt, sowie eine Vielzahl (52) von Kunststofffäden oder -drähten umfasst, die Triebe (62) der Pflanze (6) tragen.

9. Anordnung (100) für landwirtschaftliche Zwecke nach Anspruch 8, wobei die Vielzahl (5) stützender Kunststofffäden-oder -drähte zwei stützende Fäden oder Drähte (51), die vorzugsweise zwischen dem ersten Bogen-Segment (32) und dem zweiten Bogen-Segment (33) des Körpers (3) der Stange (1) positioniert sind, sowie eine Vielzahl tragender Kunststofffäden oder -drähte (52) umfasst, die in feststehende tragende Kunststofffäden oder -drähte (52A) und bewegliche tragende Kunststofffäden oder -drähte (52B) unterteilt sind.

10. Anordnung (100) für landwirtschaftliche Zwecke nach einem der Ansprüche 6 bis 9, die des Weiteren zwei Endstützen (4A, 4B) umfasst, die an den einander gegenüberliegenden Enden jeder Reihe der Vielzahl (5) stützender Kunststofffäden oder -drähte positioniert sind, die sich von den Endstützen aus erstrecken.

11. Anordnung (100) für landwirtschaftliche Zwecke nach einem der Ansprüche 6 bis 10, die des Weiteren eine Vorrichtung (9) umfasst, mit der die Position der beweglichen tragenden Kunststofffäden oder -Drähte (58B) reguliert wird, und die vorzugsweise eine Bogen-Führung (91) umfasst, die an dem Körper (3) der Stange (1) an dem zweiten Bogen-Segment (33) und nahe an dem ersten Bogen-Segment (32) angebracht ist, und die Haken (10) umfasst, die wiederholtes Festhaken und Loshaken eines beweglichen tragenden Kunststofffadens oder -drahtes (52B) zulassen.

12. Einsatz einer geformten Stange (1) für landwirtschaftliche Zwecke nach einem der Ansprüche 1 bis 5 zum Zusammenbauen einer Anordnung (100) für landwirtschaftliche Zwecke zum Ziehen fruchttragender Pflanzen (6).

13. Verfahren zum Ziehen fruchttragender Pflanzen (6), das die folgenden Schritte umfasst:
a) Bereitstellen einer Vielzahl geformter Stangen (1) für landwirtschaftliche Zwecke nach einem der Ansprüche 1 bis 5;
b) Befestigen der Vielzahl geformter Stangen (1) für landwirtschaftliche Zwecke im Boden in einem vorgegebenen Abstand zueinander, während fruchttragende Pflanzen (6) vorhanden sind oder nicht;
c) Befestigen einer Vielzahl (5) von Kunststofffäden oder -drähten zum Tragen von Pflanzen (6), horizontal und parallel zueinander, an den Stangen, so dass sie abgenommen oder nicht abgenommen werden können, wobei die Kunststofffäden oder -drähte wenigstens einen stützenden Faden oder Draht (51) sowie wenigstens einen tragenden Kunststofffaden oder -draht (52A, 52B) umfassen;
d) Wachsenlassen der fruchttragenden Pflanzen (6);
e) Hochbinden der fruchttragenden Zweige (61) der Pflanze (6) an wenigstens einen tragenden Kunststofffaden oder -draht (51);
f) Wachsenlassen der Triebe (62) der Pflanzen (6);
g) Auflegen oder Anbinden der Triebe (62) auf/an tragende Kunststofffäden oder -drähte (52A), um Teile der Pflanze mit aufsteigendem Saft und Teile der Pflanze mit absteigendem Saft zu erhalten, wobei alle Teile entlang der Vielzahl (5) von Kunststofffäden oder -drähten gleichmäßig und so verteilt werden, dass Früchte (8) im Wesentlichen ohne Kontakt miteinander oder mit Teilen der Pflanzen oder tragenden Elementen der gleichen Pflanzen wachsen.

## Revendications

1. Tuteur profilé (1) ayant un axe longitudinal (X-X) et comprenant une base (2) pour la fixation dans le sol, sensiblement rectiligne et le long dudit axe (X-X) et un corps (3) supportant de manière amovible ou non amovible une pluralité de fils en matière plastique ou de câbles (5) qui, à leur tour supportent des plantes fruitières, **caractérisé en ce que** le corps (3) est d'une seule pièce avec la base (2) et est conformé de manière à avoir une première portion (34) se déplaçant obliquement à l'écart dudit axe (X-X) vers la base (2) et une seconde portion (31) reliant ladite première portion (34) à la base (2).

2. Tuteur profilé (1) selon la revendication 1, dans lequel ladite seconde portion (31) est droite et essentiellement horizontale, et ladite première portion (34) comprend un premier segment d'arc (32) concave par rapport audit axe (X-X) et à partir de ladite première portion (31), et un second segment d'arc (33) opposé audit premier segment, à savoir qu'il est convexe par rapport audit axe (X-X).

3. Tuteur profilé (1) selon la revendication 2, dans lequel ledit premier segment d'arc (32) du corps (3) présente un rayon compris entre 25 et 35 cm, et ledit second segment d'arc (33) a un rayon compris entre 155 et 165 cm.

4. Tuteur profilé (1) selon la revendication 2 ou 3, dans lequel ladite base (2) présente une section transversale formant un H et le corps (3) présente une section transversale formant un T avec la tige T étant opposée audit axe (X-X).

5. Tuteur profilé (1) selon l'une quelconque des revendications 1 à 4, dans lequel ledit tuteur est constitué d'un matériau choisi parmi les matériaux métalliques comme le fer, le fer galvanisé, l'acier, l'acier inoxydable, en acier COR-TEN ou en acier galvanisé, ou à partir de matières plastiques particulièrement résistantes comme les plastiques renforcés par des fibres de carbone, le PVC, le polyester renforcé de fibres de verre.

6. Ensemble agricole (100) pour supporter les plantes fruitières, comprenant le tuteur profilé (1) selon l'une quelconque des revendications 1 à 5.

7. Ensemble agricole (100) selon la revendication 6, comprenant en outre des poteaux (4) d'extrémités pour la fixation et l'étirement d'une pluralité de fils en matière plastique ou de câbles (5) supportant des plantes fruitières (6), des fils en matière plastique ou des câbles qui s'étendent entre une pluralité de tuteurs profilés (1) sensiblement horizontales et parallèles entre eux.

8. Ensemble agricole (100) selon la revendication 7, dans lequel ladite pluralité de fils en matière plastique ou de câbles de support (5) comprend au moins un fil en matière plastique ou un câble (51) supportant des branches (61) et une pluralité (52) de fils en matière plastique ou de câbles portant des pousses (62) de la plante (6).

9. Ensemble agricole (100) selon la revendication 8, dans lequel ladite pluralité de fils en matière plastique ou de câbles de support (5) comprend deux fils ou câbles de support (51), de préférence positionnés entre le premier segment d'arc (32) et le second segment d'arc (33) du corps (3) du tuteur (1), et une pluralité de fils en matière plastique ou en câbles d'appui (52) divisés en fils en matière plastique ou en câbles d'appui fixes (52A) et en fils en matière plastique ou en câbles d'appui mobiles (52B).

10. Ensemble agricole (100) selon l'une quelconque des revendications 6 à 9, comprenant en outre deux poteaux d'extrémité (4A, 4B) positionnés aux extrémités opposées de chaque rangée, ladite pluralité de fils en matière plastique ou de câbles de support (5) s'étendant à partir desdits poteaux d'extrémité.

11. Ensemble agricole (100) selon l'une quelconque des revendications 6 à 10, comprenant en outre un dispositif (9) pour régler la position des fils en plastique ou des câbles d'appui mobiles (58B), comprenant de préférence un guide d'arc (91) monté sur le corps (3) du tuteur (1) en correspondance avec le second segment d'arc (33) et à proximité du premier segment d'arc (32), et comprenant des crochets (10) pour permettre l'accrochage et le décrochage de façon répétée d'un fil en plastique ou d'un câble d'appui mobile (52B).

12. Utilisation d'un tuteur profilé (1) selon l'une quelconque des revendications 1 à 5 pour l'assemblage d'un ensemble agricole (100) de reproduction de plantes fruitières (6).

13. Procédé de reproduction de plantes fruitières (6), comprenant les étapes suivantes :
a) prévoir une pluralité de tuteurs profilés (1) selon l'une quelconque des revendications 1 à 5;
b) fixer dans le sol, ladite pluralité de tuteurs profilés (1), tandis que les plantes fruitières (6) sont présentes ou non, à une distance prédéterminée entre elles ;
c) fixer auxdits tuteurs de manière amovible ou non amovible, une pluralité de fils en matière plastique ou de câbles (5), horizontalement et parallèlement entre eux, pour supporter des plantes (6), lesdits fils en matière plastique ou câbles, comprenant au moins un fil en matière plastique ou un câble de support (51) et au moins un fil en matière plastique ou un câble d'appui (52A, 52B) ;
d) laisser les plantes fruitières (6) croître;
e) lier les branches (61) des plantes (6) jusqu'à ledit au moins un fil en matière plastique ou câble de support (51) ;
f) laisser les pousses (62) des plantes (6) se développer;
g) poser ou attacher les pousses (62) aux fils en matière plastique ou aux câbles métalliques d'appui (52A) afin d'obtenir des parties de la plante avec de la sève montante et des parties de la plante avec de la sève descendante, toutes les parties étant uniformément réparties le long de ladite pluralité des fils en matière plastique ou des câbles (5) de sorte que les fruits (8) se développent sans contact substantiel entre eux ou avec des parties des plantes ou avec des éléments de soutien de ces mêmes plantes.
